# EUROPEAN PATENT APPLICATION

(11) **EP 1 720 298 A1**
(43) Date of publication of application: **08.11.2006**
(21) Application number: 05290966.0
(22) Date of filing: 03.05.2005
(51) Int. Cl.: H04L 12/56

(54) **System comprising an aggregation sub-system and tributary sub-systems**

(71) Applicant: ALCATEL, 75008 Paris (FR)
(72) Inventor: Pauwels, Bart Joseph Gerard, 3980 Tessenderlo (BE)
(74) Representative: Narmon, Gisèle Marie Thérèse

(57) **Abstract**

Systems (1) comprising aggregation sub-systems (14,15) and tributary sub-systems (11-13) comprising direct aggregation interfaces (31-33,41-43) for exchanging traffic with the aggregation sub-systems (14,15) get increased flexibilities by providing at least one tributary sub-system (12) with an indirect aggregation interface(35) for exchanging traffic with an other indirect aggregation interface (44) of an other tributary sub-system (11) in the system (1). Traffic can be exchanged not just between a direct aggregation interface (31-33,41-43) of tributary sub-systems (11-13) and aggregation sub-systems (14,15) but also between indirect aggregation interfaces (34-36,44-46) of tributary sub-systems (11-13). By providing at least one tributary sub-system (12) with a further indirect aggregation interface (45) for exchanging traffic with a yet other indirect aggregation interface (36) of a yet other tributary sub-system (13) in the system (1), the tributary sub-system (12) can exchange traffic with two other tributary sub-systems (11,13). The tributary sub-systems (11-13) are tributary line terminations and the aggregation sub-systems (14,15) are aggregation network terminations.

## Description

The invention relates to a system comprising an aggregation sub-system and at least two tributary sub-systems, the at least two tributary sub-systems comprising direct aggregation interfaces for exchanging traffic with the aggregation sub-system.

The aggregation sub-system is for example a network termination coupled to one or more networks and the tributary sub-systems are for example line terminations coupled to subscribers.

A prior art system is known from US 6,359,858 B1, which discloses a switching fabric (an aggregation sub-system) and tributary cards (tributary sub-systems). The tributary cards comprise combinations of selection blocks and distribution blocks for exchanging traffic with the switching fabric. These combinations therefore comprise direct aggregation interfaces.

For redundancy purposes, the prior art system further comprises a further switch fabric (a further aggregation sub-system). The tributary cards comprise the combinations of selection blocks and distribution blocks for further exchanging traffic with the further switching fabric. These combinations therefore further comprise further direct aggregation interfaces.

The known system is disadvantageous, inter alia, owing to the fact that it is a relatively unflexible system. All tributary cards are coupled to each switch fabric. In case of all switch fabric connections of each switch fabric being in use, a new tributary card can only be added if and only if the switch fabric is replaced by a larger one. In case of a tributary card servicing only a small number of subscribers, this tributary card is still occupying one switch fabric connection of each switch fabric.

It is an object of the invention, inter alia, to provide a system as defined in the preamble which is a relatively flexible system.

The system according to the invention is characterized in that at least one tributary sub-system comprises an indirect aggregation interface for exchanging traffic with an other indirect aggregation interface of an other tributary sub-system in the system.

By introducing the tributary sub-system comprising the indirect aggregation interface and the other tributary sub-system comprising the other indirect aggregation interface for exchanging traffic between the tributary sub-system and the other tributary sub-system, a relatively flexible system has been created, owing to the fact that traffic can now be exchanged not just between a direct aggregation interface of a tributary sub-system and an aggregation sub-system but also via two indirect aggregation interfaces of two tributary sub-systems. Aggregated traffic from / to the tributary sub-system can be exchanged either directly with the aggregation sub-system, through the direct aggregation interface or star aggregation interface, or indirectly with the aggregation sub-system, through the indirect aggregation interface or daisy-chain aggregation interface. As a result, all tributary sub-systems may be coupled to each aggregation sub-system, but not necessarily. In case of all connections of each aggregation sub-system being in use and being coupled to all tributary sub-systems, a new tributary sub-system can be added without the aggregation sub-system needing to be replaced by a larger one. In case of a tributary sub-system servicing only a small number of subscribers, this tributary sub-system may still occupy one connection of each aggregation sub-system, but not necessarily.

The system according to the invention is further advantageous, inter alia, in that an increased flexibility allows the system to be used with an increased efficiency.

An embodiment of the system according to the invention is characterized in that the system further comprises a further aggregation sub-system, the at least two tributary sub-systems further comprising further direct aggregation interfaces for exchanging traffic with the further aggregation sub-system.

The further aggregation sub-system and the further direct aggregation interfaces in the at least two tributary sub-systems provide redundancy. In case the aggregation sub-system does not function properly, the further aggregation sub-system can be used, and vice versa.

An embodiment of the system according to the invention is characterized in that the at least one tributary sub-system further comprises a further indirect aggregation interface for exchanging traffic with a yet other indirect aggregation interface of a yet other tributary sub-system in the system.

By introducing the further indirect aggregation interface into the tributary sub-system and the yet other indirect aggregation interface into the yet other tributary sub-system for exchanging traffic via the further indirect aggregation interface and the yet other indirect aggregation interface, the tributary sub-system can exchange traffic with two other tributary sub-systems. This for example allows all tributary sub-systems to form a chain, whereby each tributary sub-system can exchange traffic with both its neighbors.

An embodiment of the system according to the invention is characterized in that the tributary sub-systems comprise controllers for (de)activating the aggregation interfaces in the system.

By introducing the controllers, each tributary sub-system may be switched between a main direct aggregation mode for exchanging traffic with a main aggregation sub-system, a redundant direct aggregation mode for exchanging traffic with a redundant aggregation sub-system, and an indirect aggregation mode for exchanging traffic with for example one or more neighboring tributary sub-systems.

An embodiment of the system according to the invention is characterized in that the tributary sub-systems comprise switches for switching the aggregation interfaces in the system.

By introducing the switches, each tributary sub-system may be switched between a main direct aggregation mode for exchanging traffic with a main aggregation sub-system, a redundant direct aggregation mode for exchanging traffic with a redundant aggregation sub-system, and an indirect aggregation mode for exchanging traffic with for example one or more neighboring tributary sub-systems.

An embodiment of the system according to the invention is characterized in that the tributary sub-systems are tributary line terminations and the aggregation sub-system is an aggregation network termination and a further aggregation sub-system is a further aggregation network termination.

The tributary line terminations are for example coupled to subscriber equipment, directly without any other equipment being in between or indirectly with other equipment being in between, or to smaller network nodes closer to the boundaries of a network, and the aggregation network terminations are for example coupled to one or more networks, or to network nodes closer to a core of a network.

The invention further relates to a tributary sub-system comprising a direct aggregation interface for exchanging traffic with an aggregation sub-system, which tributary sub-system according to the invention is characterized in that the tributary sub-system further comprises an indirect aggregation interface for exchanging traffic with an other indirect aggregation interface of an other tributary sub-system.

The invention yet further relates to a method for exchanging traffic in a system comprising an aggregation sub-system and at least two tributary sub-systems, the method comprising the step of exchanging traffic between a direct aggregation interface of at least one tributary sub-system and the aggregation sub-system, which method according to the invention is characterized in that the method comprises the step of exchanging traffic between an indirect aggregation interface of at least one tributary sub-system and an other indirect aggregation interface of an other tributary sub-system.

The invention also relates to a processor program product for exchanging traffic via a tributary sub-system, the processor program product comprising the function of exchanging traffic between a direct aggregation interface of the tributary sub-system and an aggregation sub-system, which processor program product according to the invention is characterized in that the processor program product comprises the function of exchanging traffic between an indirect aggregation interface of the tributary sub-system and an other indirect aggregation interface of an other tributary sub-system.

Embodiments of the tributary sub-system according to the invention and of the method according to the invention and of the processor program product according to the invention correspond with the embodiments of the system according to the invention.

The invention is based upon an insight, inter alia, that prior art systems are based on exchanging traffic between one tributary sub-system and one aggregation sub-system, and is based upon a basic idea, inter alia, that a tributary sub-system is to be provided with an indirect aggregation interface for exchanging traffic with an other indirect aggregation interface of an other tributary sub-system.

The invention solves the problem, inter alia, to provide a system as defined in the preamble which is a relatively flexible system, and is further advantageous, inter alia, in that an increased flexibility allows the system to be used with an increased efficiency.

These and other aspects of the invention will be apparent from and elucidated with reference to the embodiments(s) described hereinafter.
Fig. 1 shows diagrammatically a first embodiment of a system according to the invention comprising a tributary sub-system according to the invention,
Fig. 2 shows diagrammatically a first embodiment of a tributary sub-system according to the invention,
Fig. 3 shows diagrammatically a second embodiment of a system according to the invention comprising a tributary sub-system according to the invention,
Fig. 4 shows diagrammatically a second embodiment of a tributary sub-system according to the invention,
Fig. 5 shows diagrammatically a third embodiment of a system according to the invention, and
Fig. 6 shows diagrammatically a fourth embodiment of a system according to the invention.

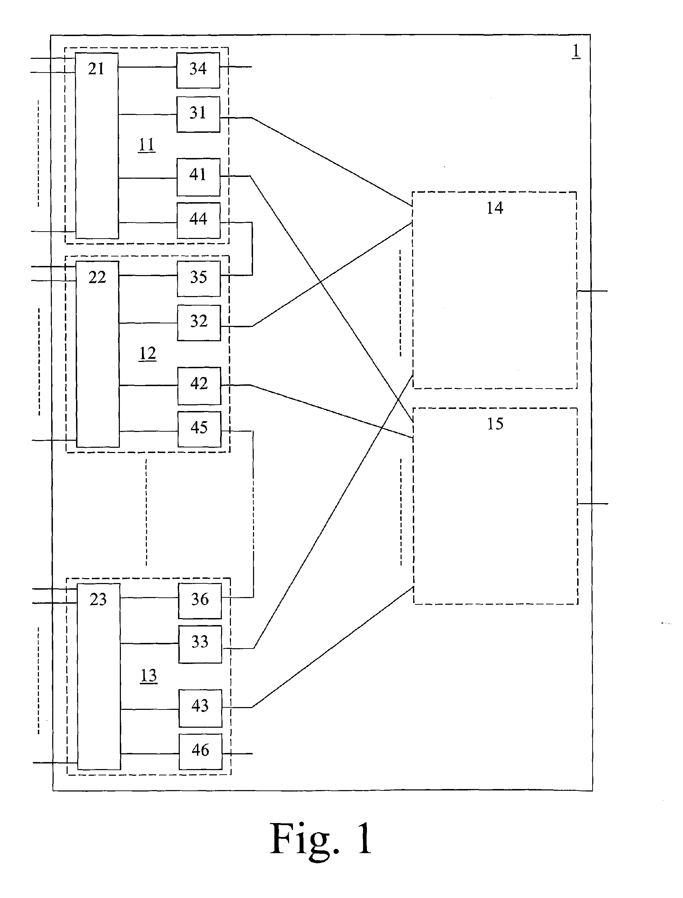

The system 1 according to the invention shown in Fig. 1 comprises a first tributary sub-system 11, a second tributary sub-system 12, a third tributary sub-system 13, an aggregation sub-system 14 and a further aggregation sub-system 15. The first (second,third) tributary sub-system 11 (12,13) comprises a coupler 21 (22,23) to be coupled to for example subscriber equipment such as modems and coupled to a direct aggregation interface 31 (32,33) and to a further direct aggregation interface 41 (42,43) and to an indirect aggregation interface 34 (35,36) and to a further indirect aggregation interface 44 (45,46). The aggregation interface 31 (32,33) is further coupled to a first (second,third) input of the aggregation sub-system 14. The further aggregation interface 41 (42,43) is further coupled to a first (second,third) input of the further aggregation sub-system 15.

The indirect aggregation interface 34 is not used, the further indirect aggregation interface 44 is further coupled to the indirect aggregation interface 35. The further indirect aggregation interface 45 is further coupled to the indirect aggregation interface 36. The further indirect aggregation interface 46 is not used. Outputs of the aggregation sub-systems 14,15 are to be coupled to for example one or more networks.

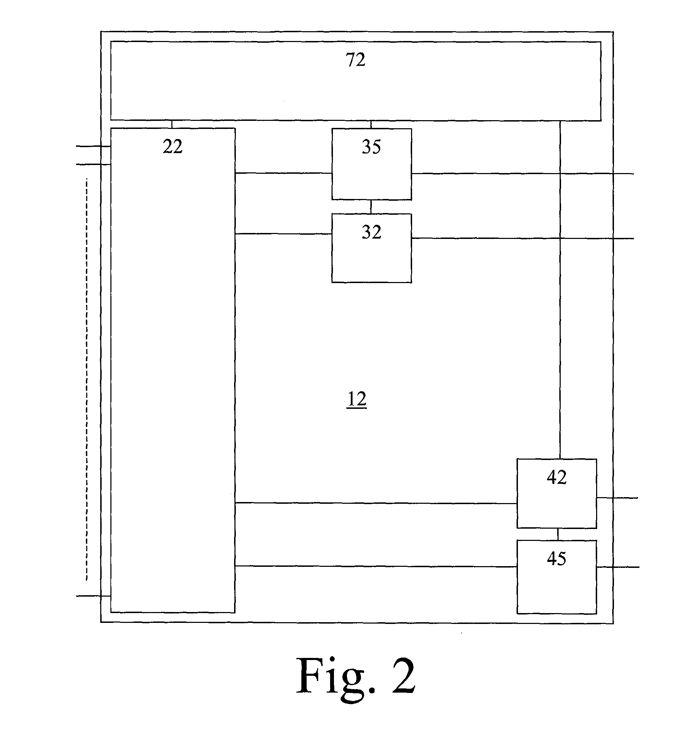

The tributary sub-system 12 according to the invention shown in Fig. 2 comprises a controller 72 and a coupler 22. The coupler 22 is coupled to the controller 72 and is coupled to a direct aggregation interface 32 and to a further direct aggregation interface 42 and to an indirect aggregation interface 35 and to a further indirect aggregation interface 45. All aggregation interfaces 32,35,42,45 are further coupled to the controller 72. Of course, the tributary sub-systems 11,13 may be realized similarly.

In a prior art situation, the indirect aggregation interfaces 34-36,44-46 are not present. Each tributary sub-system 11-13 can exchange traffic with the aggregation sub-system 14 and, if necessary for redundancy purposes, can further exchange traffic with the further aggregation sub-system 15. As a result, subscribers using subscriber equipment coupled to the couplers 21-23 can exchange information with other subscribers or with service providers via one or more networks coupled to the aggregation sub-systems 14,15 in a way common in the art. So, the couplers 21-23 and the direct aggregation interfaces 31-33,41-43 and the aggregation sub-systems 14,15 are all common in the art.

To make the system 1 a more flexible system 1, the indirect aggregation interfaces 34-36,44-46 have been introduced. As a result, for example each tributary sub-system 12 can now not only exchange traffic with the aggregation sub-systems 14,15 but can also exchange traffic with for example neighboring tributary sub-systems 11,13.

According to a first option, the tributary sub-system 12 is in a main direct aggregation mode for exchanging traffic with the aggregation sub-system 14 (a main aggregation sub-system). The controller 72 comprises a detector not shown and for example coupled to the direct aggregation interfaces 32,42. In case this detector detects that it is not possible to exchange traffic with the aggregation sub-system 14, the controller 72 controls the aggregation interfaces 32 and 35 such that the tributary sub-system 12 is switched to exchanging traffic with for example the neighboring tributary sub-system 11. As a result, in case the aggregation sub-system 14 does not provide a physical communication capability with the tributary sub-system 12, the traffic from that tributary sub-system 12 will be aggregated by the tributary sub-system 11 with the own traffic of the tributary sub-system 11 and will be conveyed through the coupler 21 and the direct aggregation interface 31 of the tributary sub-system 11 to the aggregation sub-system 14.

According to a second option, the tributary sub-system 12 is in a main direct aggregation mode for exchanging traffic with the aggregation sub-system 14 (a main aggregation sub-system). The controller 72 comprises the detector not shown and for example coupled to the aggregation interfaces 32,42. In case this detector has detected that it is no longer possible to exchange traffic with the aggregation sub-system 14, the controller 72 controls the aggregation interfaces 32 and 35 such that the tributary sub-system 12 is switched into an indirect aggregation mode for exchanging traffic with for example the neighboring tributary sub-system 11. As a result, in case there is a problem with the aggregation sub-system 14, which problem might be situated in the coupling between this aggregation sub-system 14 and the tributary sub-system 12 or in the aggregation sub-system connection coupled to this coupling, it is no longer necessary to switch the entire system 1 from the main direct aggregation mode into a redundant direct aggregation mode. In other words, it is no longer necessary to deactivate the aggregation sub-system 14 and/or to deactivate the direct aggregation interfaces coupled to the aggregation sub-system 14, and it is no longer necessary to activate the further aggregation sub-system 15 and/or to activate the direct aggregation interfaces coupled to the further aggregation sub-system 15. Instead of that, it is possible to try to exchange the traffic between the tributary sub-system 12 and the aggregation sub-system 14 via the neighboring tributary sub-system 11.

According to a third option, the tributary sub-system 12 is in a redundant direct aggregation mode for exchanging traffic with the further aggregation sub-system 15 (a redundant aggregation sub-system). The controller 72 comprises the detector not shown and for example coupled to the aggregation interfaces 32,42. In case this detector has detected that it is no longer possible to exchange traffic with the further aggregation sub-system 15, the controller 72 controls the aggregation interfaces 42 and 45 such that the tributary sub-system 12 is switched into an indirect aggregation mode for exchanging traffic with for example the neighboring tributary sub-system 13. As a result, in case there is a problem with the further aggregation sub-system 15, which problem might be situated in the coupling between this further aggregation sub-system 15 and the tributary sub-system 12 or in the further aggregation sub-system connection coupled to this coupling, it is no longer necessary to switch the entire system 1 from the redundant aggregation mode into a main aggregation mode. In other words, it is no longer necessary to deactivate the further aggregation sub-system 15 and/or to deactivate the direct aggregation interfaces coupled tothe further aggregation sub-system 15, and it is no longer necessary to activate the aggregation sub-system 14 and/or to activate the direct aggregation interfaces coupled tothe aggregation sub-system 14. Instead of that, it is possible to try to exchange the traffic between the tributary sub-system 12 and the further aggregation sub-system 15 via the neighboring sub-system 13.

According to a fourth option, the tributary sub-system 12 is in a main direct aggregation mode for exchanging traffic with the aggregation sub-system 14 (a main aggregation sub-system). In case the detector has detected that it is no longer possible to exchange traffic with the aggregation sub-system 14, the controller 72 controls the aggregation interfaces 32 and 35 such that the tributary sub-system 12 is switched into an indirect aggregation mode for exchanging traffic with for example the neighboring tributary sub-system 11. As a result, in case there is a problem with the aggregation sub-system 14, which problem might be situated in the coupling between this aggregation sub-system 14 and the tributary sub-system 12 or in the aggregation sub-system connection coupled to this coupling, it is no longer necessary to switch the tributary sub-system 12 from the main direct aggregation mode into a redundant direct aggregation mode. In other words, it is no longer necessary to deactivate a part of the aggregation sub-system 14 used for the tributary sub-system 12 and/or to deactivate the direct aggregation interfaces coupled to this part of the aggregation sub-system 14, and it is no longer necessary to activate a part of the further aggregation sub-system 15 used for the tributary sub-system 12 and/or to activate the direct aggregation interfaces coupled to this part of the further aggregation sub-system 15. Instead of that, it is possible to try to exchange the traffic between the tributary sub-system 12 and the aggregation sub-system 14 via the neighboring sub-system 11.

According to a fifth option, the tributary sub-system 12 is in a redundant direct aggregation mode for exchanging traffic with the further aggregation sub-system 15 (a redundant aggregation sub-system). In case the detector has detected that it is no longer possible to exchange traffic with the further aggregation sub-system 15, the controller 72 controls the aggregation interfaces 42 and 45 such that the tributary sub-system 12 is switched into an indirect aggregation mode for exchanging traffic with for example the neighboring tributary sub-system 13. As a result, in case there is a problem with the further aggregation sub-system 15, which problem might be situated in the coupling between this further aggregation sub-system 15 and the tributary sub-system 12 or in the further aggregation sub-system connection coupled to this coupling, it is no longer necessary to switch the tributary sub-system 12 from the redundant direct aggregation mode into a main direct aggregation mode. In other words, it is no longer necessary to deactivate a part of the further aggregation sub-system 15 used for the tributary sub-system 12 and/or to deactivate the direct aggregation interfaces coupled to this part of the further aggregation sub-system 15 and the tributary sub-system 12, and it is no longer necessary to activate a part of the aggregation sub-system 14 used for the tributary sub-system 12 and/or to activate the direct aggregation interfaces coupled to this part of the aggregation sub-system 14 and the tributary sub-system 12. Instead of that, it is possible to try to exchange the traffic between the tributary sub-system 12 and the further aggregation sub-system 15 via the neighboring sub-system 13.

According to a sixth option, the three tributary sub-systems 11-13 are coupled to the aggregation sub-system 14 and to the further aggregation sub-system 15, and a fourth tributary sub-system not shown is to be added. In case both aggregation sub-systems 14,15 do not have any free connections left, this fourth tributary sub-system cannot be coupled to both aggregation sub-systems 14,15. With the fourth tributary sub-system being a tributary sub-system according to the invention, this fourth tributary sub-system does not need to be coupled to both aggregation sub-systems 14,15. It is sufficient to couple the indirect aggregation interfaces of this fourth tributary sub-system to the indirect aggregation interfaces of the neighboring tributary sub-systems. In other words, in case the aggregation sub-systems 14,15 cannot be coupled to more tributary sub-systems than to the ones to which they are already coupled, a next tributary sub-system can still be added to the system, without both aggregation sub-systems 14,15 needing to be replaced by larger ones.

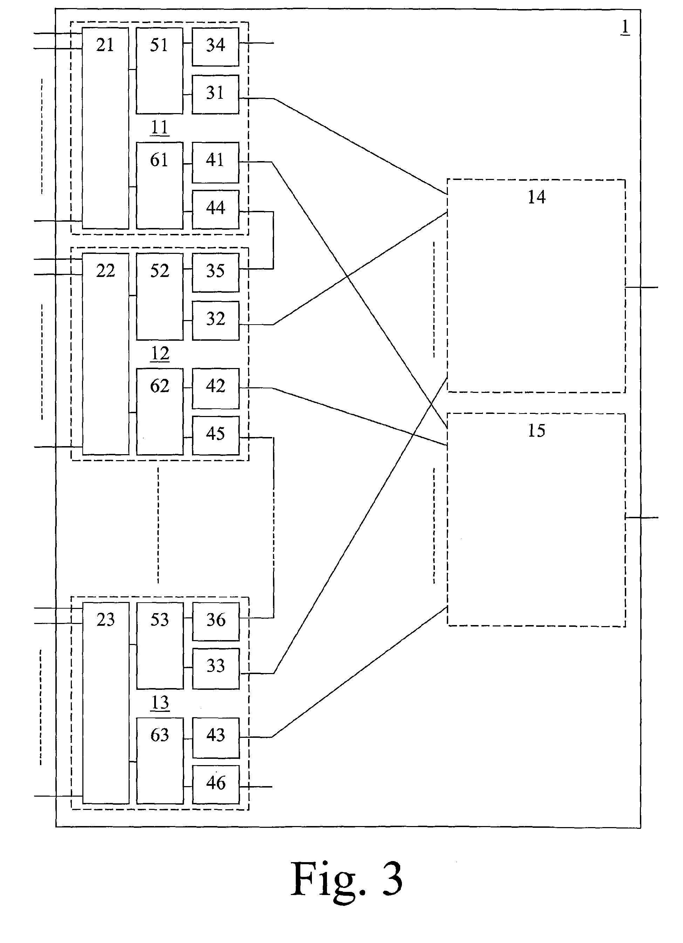

The system 1 according to the invention shown in Fig. 3 corresponds with the system 1 shown in Fig. 1, apart from the following. The coupler 21 (22,23) is now coupled to an input of a switch 51 (52,53) comprising two outputs and to an input of a further switch 61 (62,63) comprising two outputs. One output of the switch 51 is coupled to an aggregation interface 34 not used here, the other output of the switch 51 is coupled via an aggregation interface 31 and a coupling to a first input of the aggregation sub-system 14. One output of the switch 52 is coupled to an aggregation interface 35, which is further coupled via an aggregation interface 44 to one output of the further switch 61, the other output of the switch 52 is coupled via an aggregation interface 32 and a coupling to a second input of the aggregation sub-system 14. One output of the switch 53 is coupled to an aggregation interface 36, which is further coupled via an aggregation interface 45 to one output of the further switch 62, the other output of the switch 53 is coupled via an aggregation interface 33 and a coupling to a third input of the aggregation sub-system 14. The other output of the further switch 61 is coupled via a further aggregation interface 41 and a coupling to a first input of the further aggregation sub-system 15. The other output of the further switch 62 is coupled via a further aggregation interface 42 and a coupling to a second input of the further aggregation sub-system 15. One output of the further switch 63 is coupled via a further aggregation interface 43 and a coupling to a third input of the further aggregation sub-system 15, the other output of the further switch 63 is coupled to an aggregation interface 46 not used here.

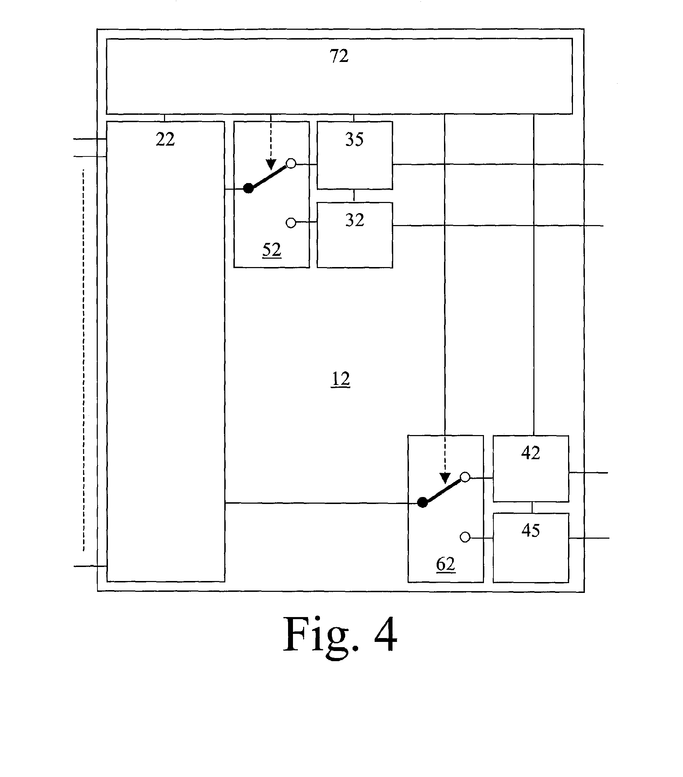

The tributary sub-system 12 according to the invention shown in Fig. 4 corresponds with the tributary sub-system 12 shown in Fig. 2, apart from the following. The coupler 22 is coupled to an input of a switch 52 comprising two outputs and to an input of a further switch 62 comprising two outputs. The outputs of the switch 52 are coupled to the aggregation interfaces 32 and 35 and the outputs of the further switch 62 are coupled to further aggregation interfaces 42 and 45. Of course, the tributary sub-systems 11,13 may be realized similarly.

In other words, compared to the system 1 shown in Fig. 3, in the tributary sub-system 12 shown in Fig. 4 the aggregation interfaces 31-33,41,43 are (de)activated via the switches 51-53,61-63.

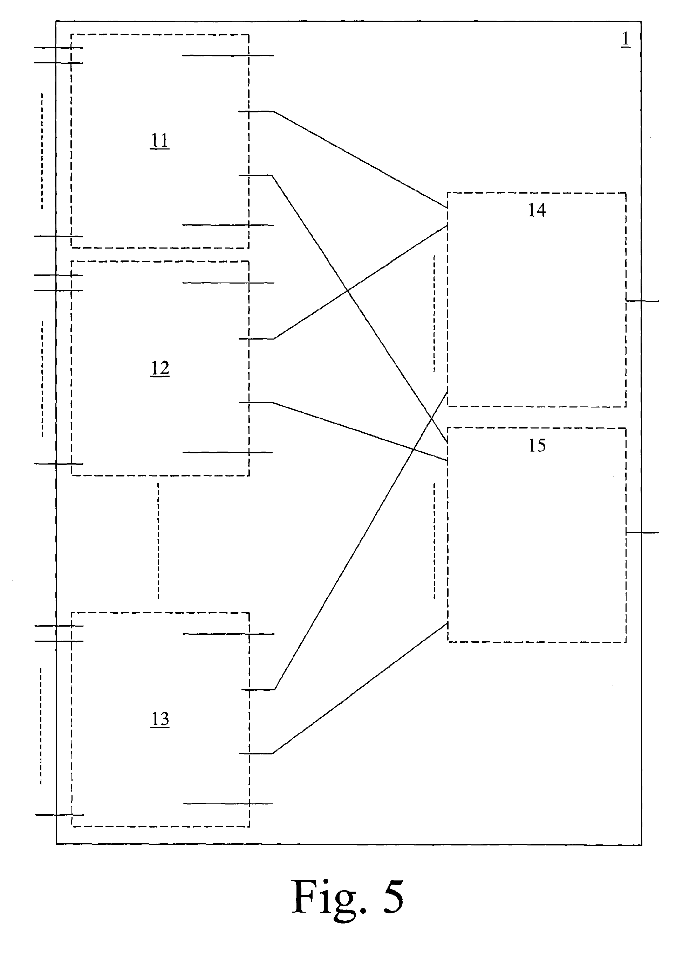

The system 1 according to the invention shown in Fig. 5 comprises the tributary sub-systems 11-13 each one only coupled to both aggregation sub-systems 14,15 and not coupled to its neighbors.

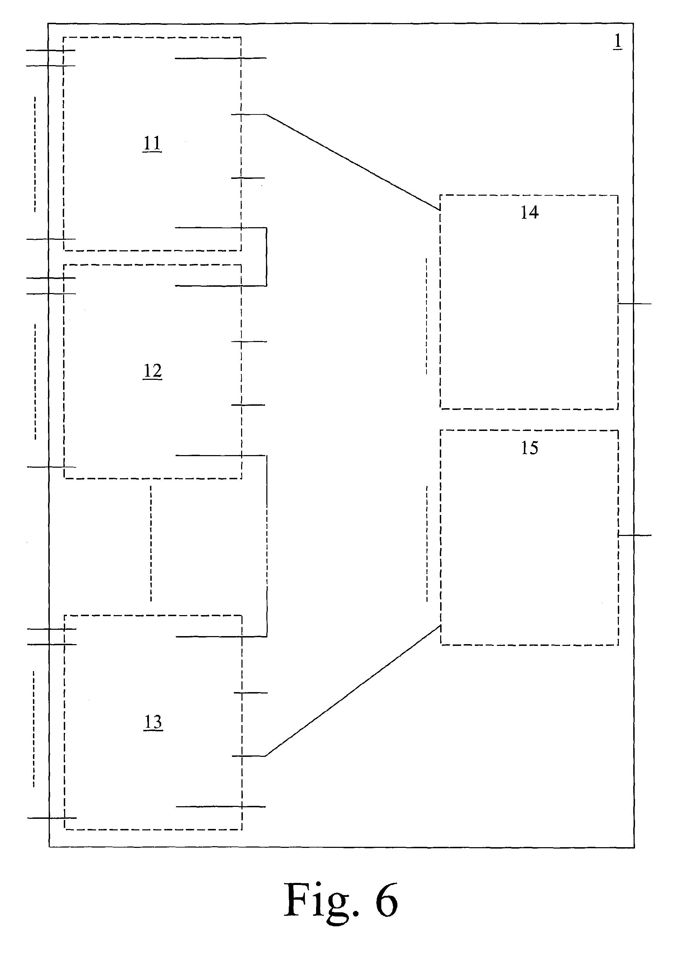

The system 1 according to the invention shown in Fig. 6 comprises the tributary sub-system 11 coupled to the aggregation sub-system 14 and further coupled to its neighboring tributary sub-system 12. This tributary sub-system 12 is further coupled to its neighboring tributary sub-system 12, which is further coupled to the aggregation sub-system 15. In case of the aggregation sub-system 14 being a main aggregation sub-system and the aggregation sub-system 15 being a redundant aggregation sub-system, the tributary sub-systems 12 and 13 exchange traffic with the aggregation sub-system 14 via the tributary sub-system 11 and/or the tributary sub-systems 11 and 12 exchange traffic with the aggregation sub-system 15 via the tributary sub-system 13.

So, in a minimum situation, the system 1 comprises the aggregation sub-system 14 and at least two tributary sub-systems 11-13, the at least two tributary sub-systems 11-13 comprising the direct aggregation interfaces 31-33 for exchanging traffic with the aggregation sub-system 14, and at least one tributary sub-system 12 comprising the indirect aggregation interface 35 for exchanging traffic with an other indirect aggregation interface 44 of an other tributary sub-system 11. The at least two tributary sub-systems 12,11 comprising the indirect aggregation interfaces 35,44 may correspond partly or entirely with the at least two tributary sub-systems 11-13 comprising the direct aggregation interfaces 31-33 or not.

Preferably, but not exclusively, the system 1 further comprises the further aggregation sub-system 15, the at least two tributary sub-systems 11-13 further comprising the further direct aggregation interfaces 41-43 for exchanging traffic with the further aggregation sub-system 15, to introduce redundancy, and/or the at least one tributary sub-system 12 further comprises a further indirect aggregation interface 45for exchanging traffic with a yet other indirect aggregation interface 36of a yet other tributary sub-system 13. The yet other tributary sub-system 13 comprising the yet other indirect aggregation interface 36may correspond partly or entirely with one or more of the at least two tributary sub-systems 11-13 comprising the direct aggregation interfaces 31-33 or not.

By realizing the switches 51-53,61-63 for example by means of switching means, each having one main contact and two switching contacts and each being controlled by the controller 72, this controller 72 (de)activates the aggregation interfaces 31-36,41-46 via these switches 51-53,61-63. Other ways of (de)activating at least one of these aggregation interfaces 31-36,41-46 are not to be excluded, such as internal switching means to be introduced into the controllers 72.

The tributary sub-systems 11-13 are for example tributary line terminations and the aggregation sub-system 14 is for example an aggregation network termination and the further aggregation sub-system 15 is for example a further aggregation network termination.

The detector not shown and forming part of the controller 72 can be a prior art detector for discovering an actual initial configuration before operation or for detecting problems during operation with the aggregation sub-systems 14,15, for example by checking signals passing by (unidirectional system), by checking messages passing by (unidirectional system), by sending signals and checking response signals (bidirectional system or two opposite unidirectional systems), and/or by sending messages and checking response messages (bidirectional system or two opposite unidirectional systems) etc. However, according to the invention, in response to a problem detection, the tributary sub-system according to the invention may go from for example a main direct aggregation mode into an indirect aggregation mode, and in response to several problem detections within a time interval or in response to one or more problem detections at a predefined time of the day, week or month, the tributary sub-system according to the invention may go from for example a main direct aggregation mode or an indirect aggregation mode into a redundant direct aggregation mode, without excluding other options, such as for example comparing problem detections with masks and in response reacting to the problem detections by changing the mode etc.

All couplings shown in the Figures may be unidirectional couplings, in case of the system being a unidirectional system, and may be bidirectional couplings, in case of the system being a bidirectional system. So, respective inputs and outputs of for example the switches may be respective outputs and inputs or may be respective in/outputs and in/outputs. Independently of the system being a unidirectional system or a bidirectional system, it is to be noted that a switch and/or an interface of a tributary sub-system is to be controlled by the tributary sub-system's controller for outgoing traffic leaving the tributary sub-system and destined for an aggregation sub-system possibly via an other tributary sub-system. For incoming traffic entering the tributary sub-system and originating from an other interface of an other tributary sub-system and destined for an aggregation sub-system, the switch and/or the interface should be able to receive this traffic whenever arriving. This may limit for example the available time per tributary sub-system for exchanging traffic, but not more than already needed to be done in the prior art situation for exchanging traffic with the aggregation sub-system. Alternatively, buffers can be introduced.

The tributary sub-systems 11-13 in the Figures 1 and 3 form chains owing to the fact that each non-bordering tributary sub-system is coupled to both its neighbors and that both bordering tributary sub-system are each coupled to only one neighbor. Different constructions without departing from the scope of this invention are not to be excluded, such as for example constructions in which at least one non-bordering tributary sub-system is not coupled to both its neighbors but is only coupled to one neighbor or is not coupled to any neighbor at all, and such as for example constructions in which at least one bordering tributary sub-system is not coupled to only one neighbor but is not coupled to any neighbor at all. Further, it is not to be excluded that one or more tributary sub-systems are going to be coupled to more than two other tributary sub-systems and that one or more tributary sub-systems are going to be coupled to one or more non-neighbors etc.

Units such as one or more direct aggregation interfaces and/or one or more indirect aggregation interfaces and/or one or more switches may be combined into one or more larger units and/or may be divided into smaller units and/or may be located differently with respect to each other and/or with respect to the couplers, without departing from the scope of this invention.

The expression "for" in for example "for exchanging" and "for (de)activating" etc. does not exclude that other functions are performed as well, simultaneously or not. The expressions "X coupled to Y" and "a coupling between X and Y" and "coupling/couples X and Y" etc. do not exclude that an element Z is in between X and Y. The expression "P comprises/comprising Q" etc. does not exclude that an element R is comprised as well. The terms "a" and "an" do not exclude the possible presence of one or more pluralities.
The steps/functions of exchanging do not exclude further steps/functions, like for example, inter alia, the steps/functions described for the Figures.

## Claims

1. A system (1) comprising an aggregation sub-system (14) and at least two tributary sub-systems (11-13), the at least two tributary sub-systems (11-13) comprising direct aggregation interfaces (31-33) for exchanging traffic with the aggregation sub-system (14), **characterized in that** at least one tributary sub-system (12) comprises an indirect aggregation interface (35) for exchanging traffic with an other indirect aggregation interface (44) of an other tributary sub-system (11) in the system (1).

2. The system (1) as defined in claim 1, **characterized in that** the system (1) further comprises a further aggregation sub-system (15), the at least two tributary sub-systems (11-13) further comprising further direct aggregation interfaces (41-43) for exchanging traffic with the further aggregation sub-system (15).

3. The system (1) as defined in claim 1 or 2, **characterized in that** the at least one tributary sub-system (12) further comprises a further indirect aggregation interface (45) for exchanging traffic with a yet other indirect aggregation interface (36) of a yet other tributary sub-system (13) in the system (1).

4. The system (1) as defined in claim 1, 2 or 3, **characterized in that** the tributary sub-systems (11-13) comprise controllers (72) for (de)activating the aggregation interfaces (31-36,41-46) in the system (1).

5. The system (1) as defined in claim 1, 2 or 3, **characterized in that** the tributary sub-systems (11-13) comprise switches (51-53,61-63) for switching the aggregation interfaces (31-36,41,46) in the system (1).

6. The system (1) as defined in claims 1, 2, 3, 4 or 5, **characterized in that** the tributary sub-systems (11-13) are tributary line terminations and the aggregation sub-system (14) is an aggregation network termination and a further aggregation sub-system (15) is a further aggregation network termination.

7. A tributary sub-system (12) comprising a direct aggregation interface (32) for exchanging traffic with an aggregation sub-system (14), **characterized in that** the tributary sub-system (12) further comprises an indirect aggregation interface (35) for exchanging traffic with an other indirect aggregation interface (44) of an other tributary sub-system (11).

8. The tributary sub-system (12) as defined in claim 7, **characterized in that** the tributary sub-system (12) further comprises a further direct aggregation interface (42) for exchanging traffic with a further aggregation sub-system (15).

9. The tributary sub-system (12) as defined in claim 7 or 8, **characterized in that** the tributary sub-system (12) further comprises a further indirect aggregation interface (45) for exchanging traffic with a yet other indirect aggregation interface (36) of a yet other tributary sub-system (13).

10. The tributary sub-system (12) as defined in claim 7, 8 or 9, **characterized in that** the tributary sub-system (12) comprises a controller (72) for (de)activating the aggregation interfaces (32,35,42,45).

11. The tributary sub-system (12) as defined in claim 7, 8 or 9, **characterized in that** the tributary sub-system (12) comprises a switch (52,62) for switching the aggregation interfaces (32,35,42,45).

12. The tributary sub-system (12) as defined in claim 7, 8, 9, 10 or 11, **characterized in that** the tributary sub-system (12) is a tributary line termination and the aggregation sub-system (14) is an aggregation network termination and a further aggregation sub-system (15) is a further aggregation network termination.

13. A method for exchanging traffic in a system (1) comprising an aggregation sub-system (14) and at least two tributary sub-systems (11-13), the method comprising the step of exchanging traffic between a direct aggregation interface (31-33) of at least one tributary sub-system (11-13) and the aggregation sub-system (14), **characterized in that** the method comprises the step of exchanging traffic between an indirect aggregation interface (35) of at least one tributary sub-system (12) and an indirect aggregation interface (44) of an other tributary sub-system (11).

14. A processor program product for exchanging traffic via a tributary sub-system (12), the processor program product comprising the function of exchanging traffic between a direct aggregation interface (32) of the tributary sub-system (12) and an aggregation sub-system (14), **characterized in that** the processor program product comprises the function of exchanging traffic between an indirect aggregation interface (35) of the tributary sub-system (12) and an other indirect aggregation interface (44) of an other tributary sub-system (11).
